# EUROPEAN PATENT SPECIFICATION

(11) **EP 1 975 199 B1**
(45) Date of publication and mention of the grant of the patent: **20.10.2010**
(21) Application number: 07706850.0
(22) Date of filing: 16.01.2007
(51) Int. Cl.: C08L 15/00, B60C 1/00, C08L 9/00

(54) **RUBBER COMPOSITION AND PNEUMATIC TIRES MADE BY USING THE SAME**
KAUTSCHUKZUSAMMENSETZUNG UND DAMIT HERGESTELLTE LUFTREIFEN
COMPOSITION DE CAOUTCHOUC ET PNEUS FABRIQUES A PARTIR DE CELLE-CI

(30) Priority: 16.01.2006 JP 2006007521
(43) Date of publication of application: 01.10.2008
(73) Proprietor: Bridgestone Corporation, Tokyo 104-8340 (JP)
(72) Inventor: MORI, Noriko, Kodaira-shi, Tokyo 187-8531 (JP)
(74) Representative: Whalley, Kevin
(86) International application number: PCT/JP2007/050523
(87) International publication number: WO 2007/081026

(56) References cited:
- EP-A- 0 372 798
- EP-A- 1 544 241
- EP-A- 1 612 241
- JP-A- 02 147 646
- JP-A- 2000 129 037
- JP-A- 2003 089 731
- JP-A- 2003 253 051
- JP-A- 2004 018 760

## Description

This invention relates to a rubber composition and a to pneumatic tire using the rubber composition in a tread rubber, and more particularly to a rubber composition capable of balancing steering stability, wear resistance and fracture characteristics of a tire at high levels by using in a tread rubber.

Recently, an improved steering stability, particularly an improved steering stability on a dry road surface is required as a tire performance with advances of engine performances in automobiles. On the other hand, it is an important issue to ensure the wear resistance and fracture characteristics of the tire in view of economical efficiency and safety. Under such circumstances, various techniques are heretofore developed for improving the steering stability of the tire. In this context, it is known that a loss property (tan δ) at a temperature above room temperature is generally important as a development indicator for a rubber composition contributing to steering stability of a tire, and it is effective to increase hysteresis loss at a temperature above room temperature of a rubber composition to be used in a tread rubber of a tire in order to improve the steering stability of the tire.

For example, JP-A-S61-203145 and JP-A-S63-101440 disclose a method using a liquid polymer having a weight average molecular weight of tens of thousands as a technique for increasing the hysteresis loss of the rubber composition.

Further, JP-B-H8-30125 discloses a method compounding a hydrogenated liquid polymer having a weight average molecular weight of 5000 to 200000 into a partially hydrogenated high-molecular weight polymer as a technique for increasing the hysteresis loss of the rubber composition.

The liquid polymers described in JP-A-S61-203145 and JP-A-S63-101440 have a weight average molecular weight of tens of thousands and their molecular weight is relatively low, but they have many crosslinkable double bonds and a part thereof forms cross-linkages with a rubber as a matrix to be incorporated into the matrix. Therefore, there is a problem in that the hysteresis loss is not sufficiently caused.

Further, in the method described in JP-B-H8-30125, a hydrogenation ratio of the high-molecular weight polymer constituting a matrix of the rubber composition is excessively high to adversely affect a crosslinking mode of the rubber composition, so that there is a problem in that fracture characteristics are deteriorated.
Attention is also drawn to the disclosures of EP-0371798 A, EP-1612241 A, and EP-1544241 A.

It is, therefore, an object of the invention to solve the above-mentioned problems of the conventional techniques and to provide a rubber composition capable of improving steering stability without deteriorating fracture characteristics and wear resistance of a tire by using in a tread rubber of the tire. Also, it is another object of the invention to provide a pneumatic tire using such a rubber composition in a tread rubber and balancing the steering stability, the wear resistance and the fracture characteristics at high levels.

The inventor has made various studies in order to achieve the above objects and discovered that the steering stability can be highly improved without deteriorating the fracture characteristics and wear resistance by using a rubber composition formed by compounding a low-molecular weight aromatic vinyl compound-conjugated diene compound copolymer or conjugated diene compound polymer having a specified molecular weight and hydrogenation ratio (component B) into a high-molecular weight aromatic vinyl compound-conjugated diene compound copolymer or conjugated diene compound polymer having a specified molecular weight and hydrogenation ratio (component A) in the tread rubber of the tire, and as a result the invention has been accomplished.

That is, the rubber composition according to the invention comprises 10 to 200 parts by mass of a component (B) which is an aromatic vinyl compound-conjugated diene compound copolymer or a conjugated diene compound polymer having a weight average molecular weight as measured through a gel permeation chromatography and converted to polystyrene of 1.0×10³ to 2.0×10⁵ based on 100 parts by mass of a component (A) which is an aromatic vinyl compound-conjugated diene compound copolymer or a conjugated diene compound polymer having a weight average molecular weight as measured through a gel permeation chromatography and converted to polystyrene of 3.0×10⁵ to 3.0×10⁶, and is characterized in that not less than 10% but less than 60% of an unsaturated bond in a conjugated diene compound portion of the component (A) is hydrogenated, and not more than 90% of an unsaturated bond in a conjugated diene compound portion of one component (B) is hydrogenated.

In a preferable embodiment of the rubber composition according to the invention, the component (A) is one formed by polymerizing with a lithium-based polymerization initiator.

In another preferable embodiment of the rubber composition according to the invention, the component (A) is a partially hydrogenated styrene-butadiene copolymer. In this context, a bound styrene content of the component (A) is preferably within a range of 20 to 40% by mass. In this case, the wear resistance of the rubber composition can be improved while ensuring the fracture characteristics. Also, a vinyl bond content in a butadiene portion of the component (A) is preferably within a range of 30 to 60%. In this case, the steering stability and wear resistance of the tire can be sufficiently improved, because wet-skid resistance and wear resistance of the rubber composition are high.

In another preferable embodiment of the rubber composition according to the invention, 30% to 50% of the unsaturated bond in the conjugated diene compound portion of the component (A) is hydrogenated. In this case, the hysteresis loss at a temperature above room temperature of the rubber composition is very high, and further breaking strength and modulus of the rubber composition are high.

In another preferable embodiment of the rubber composition according to the invention, a bound styrene content of the component (B) is 0 to 60% by mass. In this case, it is not resinified to make the rubber composition hard, and wet-skid resistance and dry gripping property are good.

In the rubber composition according to the invention, it is preferable that 20% to 90% of the unsaturated bond in the conjugated diene compound portion of the component (B) is hydrogenated. In this case, the hysteresis loss at a temperature above room temperature of the rubber composition is high. Moreover, it is more preferable that 40% to 90% of the unsaturated bond in the conjugated diene compound portion of the component (B) is hydrogenated. In this case, the hysteresis loss at a temperature above room temperature of the rubber composition is very high, and further the component (B) can be easily produced.

In another preferable embodiment of the rubber composition according to the invention, the component (B) has a number average molecular weight as measured through a gel permeation chromatography and converted to polystyrene of not less than 2000 but less than 30000.

The rubber composition according to the invention preferably comprises 10 to 100 parts by mass of the component (B) based on 100 parts by mass of the component (A). In this case, the steering stability of the tire can be sufficiently improved while ensuring productivity of the rubber composition.

Moreover, a pneumatic tire according to the invention is characterized by using the above rubber composition in a tread rubber.

According to the invention, there can be provided a rubber composition formed by compounding the low-molecular weight aromatic vinyl compound-conjugated diene compound copolymer or conjugated diene compound polymer having the specified molecular weight (component B) into the high-molecular weight aromatic vinyl compound-conjugated diene compound copolymer or conjugated diene compound polymer having the specified molecular weight and hydrogenation ratio (component A) and capable of highly improving the steering stability without deteriorating the fracture characteristics and wear resistance of the tire by using in the tread rubber of the tire. Also, there can be provided a pneumatic tire using such a rubber composition in the tread rubber and balancing the steering stability, the wear resistance and the fracture characteristics at high levels.

The invention will be described in detail below. The rubber composition according to the invention is formed by compounding 10 to 200 parts by mass of the component (B) which is the aromatic vinyl compound-conjugated diene compound copolymer or conjugated diene compound polymer having a weight average molecular weight as measured through a gel permeation chromatography and converted to polystyrene of 1.0×10³ to 2.0×10⁵ into 100 parts by mass of the component (A) which is the aromatic vinyl compound-conjugated diene compound copolymer or conjugated diene compound polymer having a weight average molecular weight as measured through a gel permeation chromatography and converted to polystyrene of 3.0×10⁵ to 3.0×10⁶, and wherein not less than 10% but less than 60% of the unsaturated bond in the conjugated diene compound portion of the component (A) is hydrogenated.

The rubber composition according to the invention has high hysteresis loss (tan δ) at a temperature above room temperature, since it contains the low-molecular weight aromatic vinyl compound-conjugated diene compound copolymer or conjugated diene compound polymer having a weight average molecular weight of 1.0×10³ to 2.0×10⁵ (component B). A conventional rubber composition formed by compounding the component (B) into a common rubber component has a problem that the wear resistance and fracture characteristics are deteriorated as the hysteresis loss (tan δ) is increased. On the contrary, the rubber composition according to the invention can prevent the deterioration of the wear resistance and fracture resistance by using as a matrix rubber component the high-molecular weight aromatic vinyl compound-conjugated diene compound copolymer or conjugated diene compound polymer wherein a hydrogenation ratio of the unsaturated bond in the conjugated diene compound portion is not less than 10% but less than 60% (component A) to improve a compatibility of the component (A) with the component (B). Moreover, it can further improve the hysteresis loss (tan δ) at a temperature above room temperature, since entanglements of the component (A) and the component (B) are increased. Therefore, the steering stability of the pneumatic tire can be highly improved without deteriorating the fracture characteristics (safety) and wear resistance (economic efficiency) of the tire by using the rubber composition according to the invention in the tread rubber of the tire. Furthermore, since the rubber composition according to the invention has the above-mentioned properties, it can be preferably used in a belt and various industrial rubber articles.

The component (A) in the rubber composition according to the invention which is the high-molecular weight aromatic vinyl compound-conjugated diene compound copolymer or conjugated diene compound polymer is required to have a weight average molecular weight as measured through a gel permeation chromatography (GPC) and converted to polystyrene of 3.0×10⁵ to 3.0×10⁶, preferably 7.0×10⁵ to 2.5×10⁶. When the weight average molecular weight as converted to polystyrene of the component (A) is less than 3.0×10⁵, the fracture characteristics of the rubber composition are deteriorated, while when it exceeds 3.0×10⁶, the viscosity of the polymer solution becomes too high and the productivity is deteriorated.

Further, not less than 10% but less than 60% of the unsaturated bond in the conjugated diene compound portion of the component (A) is required to be hydrogenated, and preferably 30% to 50% thereof is hydrogenated. When the hydrogenation ratio of the unsaturated bond in the conjugated diene compound portion of the component (A) is less than 10%, the degree of improving the hysteresis loss of the rubber composition is small and thereby the steering stability of the tire cannot be sufficiently improved, while when the hydrogenation ratio is not less than 60%, the crosslinking mode of the rubber composition is transformed and thereby the breaking strength and elastic modulus are deteriorated.

The component (A) is produced by copolymerizing an aromatic vinyl compound and a conjugated diene compound or polymerizing a conjugated diene compound, and preferably produced by copolymerizing the aromatic vinyl compound and the conjugated diene compound or polymerizing the conjugated diene compound with using a lithium-based polymerization initiator. As the aromatic vinyl compound are mentioned styrene, α-methyl styrene, 1-vinyl naphthalene, 3-vinyl toluene, ethyl vinyl benzene, divinyl benzene, 4-cyclohexyl styrene, 2,4,6-trimethyl styrene and so on. These aromatic vinyl compounds may be used alone or in a combination of two or more. On the other hand, as the conjugated diene compound are mentioned 1,3-butadiene, isoprene, 1,3-pentadiene, 2,3-dimethyl butadiene, 2-phenyl-1,3-butadiene, 1,3-hexadiene and so on. These conjugated diene compounds may be used alone or in a combination of two or more. Among the above aromatic vinyl compounds, styrene is particularly preferable. Among the above conjugated diene compounds, 1,3-butadiene is particularly preferable.

When the component (A) is the aromatic vinyl compound-conjugated diene compound copolymer and the aromatic vinyl compound as a starting material is styrene, the component (A) preferably has a bound styrene content of 20 to 40% by mass. When the bound styrene content of the component (A) is less than 20% by mass, the fracture characteristics of the rubber composition are deteriorated, while when it exceeds 40% by mass, the wear resistance of the rubber composition is deteriorated.

Further, when the conjugated diene compound as a starting material of the component (A) is 1,3-butadiene, the component (A) preferably has a vinyl bond content in the butadiene portion of 30 to 60%. When the vinyl bond content in the butadiene portion of the component (A) is less than 30%, the wet-skid resistance of the rubber composition is insufficient and thereby the steering stability of the tire cannot be sufficiently improved, while when it exceeds 60%, the wear resistance of the rubber composition is deteriorated.

On the other hand, the component (B) in the rubber composition according to the invention which is the low-molecular weight aromatic vinyl compound-conjugated diene compound copolymer or conjugated diene compound polymer is required to have a weight average molecular weight as measured through a gel permeation chromatography (GPC) and converted to polystyrene of 1.0×10³ to 2.0×10⁵. When the weight average molecular weight as converted to polystyrene of the component (B) is less than 1.0×10³, the fracture characteristics, wear resistance, wet-skid resistance and dry gripping property of the rubber composition are insufficient and thereby the fracture characteristics, wear resistance and steering stability of the tire cannot be balanced at high levels, while when it exceeds 2.0x10⁵, the wet-skid resistance and dry gripping property of the rubber composition are insufficient and thereby the steering stability of the tire cannot be improved. Moreover, the component (B) preferably has a number average molecular weight as measured through a gel permeation chromatography and converted to polystyrene of not less than 2000 but less than 30000.

The component (B) is produced by copolymerizing an aromatic vinyl compound and a conjugated diene compound or polymerizing a conjugated diene compound. As the aromatic vinyl compound are mentioned styrene, α-methyl styrene, 1-vinyl naphthalene, 3-vinyl toluene, ethyl vinyl benzene, divinyl benzene, 4-cyclohexyl styrene, 2,4,6-trimethyl styrene and so on. These aromatic vinyl compounds may be used alone or in a combination of two or more. On the other hand, as the conjugated diene compound are mentioned 1,3-butadiene, isoprene, 1,3-pentadiene, 2,3-dimethyl butadiene, 2-phenyl-1,3-butadiene, 1,3-hexadiene and so on. These conjugated diene compounds may be used alone or in a combination of two or more. Among the above aromatic vinyl compounds, styrene is particularly preferable. Among the above conjugated diene compounds, 1,3-butadiene is particularly preferable.

Further, the component (B) preferably has a bound styrene content of 0 to 60% by mass. When the bound styrene content of the component (B) exceeds 60% by mass, the component (B) is resinified to make the rubber composition hard, and the wet-skid resistance and dry gripping property are deteriorated and thereby the steering stability of the tire may not be improved.

Furthermore, 20% to 90% of the unsaturated bond in the conjugated diene compound portion of the component (B) is preferably hydrogenated. When not less than 20% of the unsaturated bond in the conjugated diene compound portion of the component (B) is hydrogenated, the effect on improving the hysteresis loss at a temperature above room temperature of the rubber composition becomes large. Moreover, it is more preferable that 40% to 90% of the unsaturated bond in the conjugated diene compound portion of the component (B) is hydrogenated. When the hydrogenation ratio of the unsaturated bond in the conjugated diene compound portion of the component (B) is less than 40%, the component (B) contributes to the cross-linkage of the rubber composition, the degree of improving the hysteresis loss at 30°C of the rubber composition is small and thereby the steering stability of the tire cannot be sufficiently improved. On the other hand, it is difficult to produce the component (B) having a hydrogenation ratio of the unsaturated bond in the conjugated diene compound portion of more than 90%.

In the rubber composition according to the invention, the component (B) is compounded in an amount of 10 to 200 parts by mass, preferably 10 to 100 parts by mass based on 100 parts by mass of the component (A). When the amount of the component (B) compounded is less than 10 parts by mass based on 100 parts by mass of the component (A), the steering stability of the tire cannot be sufficiently improved, while when it exceeds 200 parts by mass, the Mooney viscosity of the rubber composition is too low and the productivity becomes poor.

For example, the component (A) can be obtained by (co)polymerizing the above-mentioned aromatic vinyl compound and conjugated diene compound in a hydrocarbon solvent in the presence of ether or a tertiary amine with using a lithium-based polymerization initiator through anionic polymerization and hydrogenating the resulting (co)polymer in the presence of a hydrogenation catalyst through a usual method. For example, the component (B) can be also obtained by (co)polymerizing the above-mentioned aromatic vinyl compound and conjugated diene compound in a hydrocarbon solvent in the presence of ether or a tertiary amine with using a lithium-based polymerization initiator through anionic polymerization, and further it may be optionally hydrogenated likewise the component (A).

The hydrocarbon solvent is not particularly limited, but cycloaliphatic hydrocarbons such as cyclohexane, methyl cyclopentane, cyclooctane and the like; aliphatic hydrocarbons such as propane, butane, pentane, hexane, heptane, octane, decane and the like; and aromatic hydrocarbons such as benzene, toluene, ethylbenzene and the like can be used. These hydrocarbons may be used alone or in a combination of two or more. Among these hydrocarbons, the aliphatic hydroxarbon and cycloaliphatic hydrocarbon are preferable.

The lithium-based polymerization initiator is preferably an organolithium compound, which includes an alkyllithium such as ethyllithium, propyllithium, n-butyllithium, sec-butyllithium, t-butyllithium or the like; an aryllithium such as phenyllithium, tolyllithium or the like; an alkenyllithium such as vinyllithium, propenyllithium or the like; an alkylene dilithium such as tetramethylene dilithium, pentamethylene dilithium, hexamethylene dilithium, decamethylene dilithium or the like; an arylene dilithium such as 1,3-dilithiobenzene, 1,4-dilithiobenzene or the like; 1,3,5-trilithiocyclohexane, 1,2,5-trilithionaphthalene, 1,3,5,8-tetralithiodecane, 1,2,3,5-tetralithio-4-hexyl-anthracene and the like. Among them, n-butyllithium, sec-butyllithium, t-butyllithium and tetramethylene dilithium are preferable, and n-butyllithium is particularly preferable. The amount of the lithium-based polymerization initiator used is determined by a polymerization rate in the reaction operation and a molecular weight of the resulting (co)polymer, but it is usually about 0.02 to 5 mg, preferably 0.05 to 2 mg as a lithium atom per 100 g of a monomer.

The polymerization reaction for obtaining the components (A) and (B) may be carried out by any one of a batch polymerization system and a continuous polymerization system. The polymerization temperature in the above polymerization reaction is preferably within a range of 0 to 130°C. Also, the polymerization reaction may be conducted by any polymerization types such as isothermal polymerization, temperature rise polymerization and adiabatic polymerization. Further, an allene compound such as 1,2-butadiene or the like may be added for preventing the formation of gel in a reaction vessel during the polymerization.

For example, the above hydrogenation is carried out under pressurized hydrogen of 1 to 100 atmospheric pressure by using a catalyst selected from a hydrogenation catalyst such as an organic carboxylic acid nickel, an organic carboxylic acid cobalt and organometallic compounds of Group I-III; a catalyst of nickel, platinum, palladium, ruthenium or rhodium metal carried on carbon, silica, diatomaceous earth or the like; a complex of cobalt, nickel, rhodium or ruthenium; and so on.

The rubber composition according to the invention is required to use the component (A) as a matrix rubber component, but a usual rubber component may be blended into the component (A) and in particular natural rubber (NR), styrene-butadiene copolymer rubber (SBR), polyisoprene rubber (IR), polybutadiene rubber (BR), butyl rubber (IIR), ethylene-propylene copolymer or the like may be blended. Moreover, there may be blended a rubber component having a branch structure, in which a part thereof is modified with a polyfunctional modifying agent such as tin tetrachloride or the like. Among them, styrene-butadiene copolymer rubber (SBR) is preferable in view of compatibility. The amount of the common rubber component used is preferably not more than 60% by mass in the rubber component (i.e., the sum of the component (A) and the common rubber component).

The rubber composition of the invention is preferably compounded with a reinforcing filler, not particularly limited, but is preferably compounded with carbon black and/or silica.

The silica is not particularly limited, but includes, for example, precipitated silica (hydrous silicate), fumed silica (anhydrous silicate), calcium silicate, aluminium silicate and so on. Among them, the precipitated silica is preferable in that the effect of improving fracture characteristics and the effect of establishing the wet gripping performance and the low rolling resistance are excellent. In the rubber composition of the invention, the silica may be only compounded as the filler. In this case, the amount of the silica compounded is 10 to 250 parts by mass based on 100 parts by mass of the rubber component, and preferably 20 to 150 parts by mass from a viewpoint of the reinforcing property and the improvement efficiency of various characteristics. When the amount of the silica compounded is less than 10 parts by mass based on 100 parts by mass of the rubber component, the fracture characteristics and the like are not sufficient, while when it exceeds 250 parts by mass, the processability of the rubber composition is deteriorated.

When silica is used as the filler in the rubber composition of the invention, it is preferable that a silane coupling agent is added on compounding in view of further improving the reinforcing property. As the silane coupling agent are mentioned bis(3-triethoxysilylpropyl) tetrasulfide, bis(3-triethoxysilylpropyl) trisulfide, bis(3-triethoxysilylpropyl) disulfide, bis(2-triethoxysilylethyl) tetrasulfide, bis(3-trimethoxysilylpropyl) tetrasulfide, bis(2-trimethoxysilylethyl) tetrasulfide, 3-mercaptopropyltrimethoxy silane, 3-mercaptopropyltriethoxy silane, 2-mercaptoethyltrimethoxy silane, 2-mercaptoethyltriethoxy silane, 3-trimethoxysilylpropyl-N,N-dimethylthiocarbamoyl tetrasulfide, 3-triethoxysilylpropyl-N,N-dimethylthiocarbamoyl tetrasulfide, 2-triethoxysilylethyl-N,N-dimethylthiocarbamoyl tetrasulfide, 3-trimethoxysilylpropyl benzothiazole tetrasulfide, 3-triethoxysilylpropyl benzothiazole tetrasulfide, 3-triethoxysilylpropyl methacrylate monosulfide, 3-trimethoxysilylpropyl methacrylate monosulfide, bis(3-diethoxymethylsilylpropyl) tetrasulfide, 3-mercaptopropyl dimethoxymethyl silane, dimethoxymethylsilylpropyl-N,N-dimethylthiocarbamoyl tetrasulfide, dimethoxymethylsilylpropyl benzothiazole tetrasulfide and the like. Among them, bis(3-triethoxysilylpropyl) tetrasulfide and 3-trimethoxysilylpropyl benzothiazole tetrasulfide are preferable from a viewpoint of the effect of improving the reinforcing property. These silane coupling agents may be used alone or in a combination of two or more.

On the other hand, the carbon black is not particularly limited, but includes FEF, SRF, HAF, ISAF and SAF grade ones and the like. The carbon black preferably has an iodine adsorption number (IA) of not less than 60 mg/g and a dibutylphthalate (DBP) adsorption number of not less than 80 mL/100g. Although the various characteristics of the rubber composition can be improved by compounding the carbon black, the carbon black is more preferably HAF, ISAF and SAF grade carbon blacks in view of improving the wear resistance. In the rubber composition of the invention, the carbon black may be only compounded as the filler. In this case, the amount of the carbon black compounded is 10 to 250 parts by mass based on 100 parts by mass of the rubber component, and preferably 20 to 150 parts by mass from a viewpoint of the reinforcing property and the improvement efficiency of various characteristics. When the amount of the carbon black compounded is less than 10 parts by mass based on 100 parts by mass of the rubber component, the fracture characteristics and the like are not sufficient, while when it exceeds 250 parts by mass, the processability of the rubber composition is deteriorated.

A common crosslinking system for a rubber can be used in the rubber composition of the invention, and a combination of a crosslinking agent and a vulcanization accelerator is preferably used. As the crosslinking agent are mentioned sulfur and the like. The amount of the crosslinking agent used is preferably within a range of 0.1 to 10 parts by mass as a sulfur content, and more preferably within a range of 1 to 5 parts by mass based on 100 parts by mass of the rubber component. When the amount of the crosslinking agent compounded is 0.1 part by mass as the sulfur content based on 100 parts by mass of the rubber component, the breaking strength, wear resistance and low heat build-up of the resulting vulcanized rubber are deteriorated, while when it exceeds 10 parts by mass, the rubber elasticity is lost.

On the other hand, the vulcanization accelerator is not particularly limited, but includes a thiazole-based vulcanization accelerator such as 2-mercaptobenzothiazole (M), dibenzothiazyl disulfide (DM), N-cyclohexyl-2-benzothiazyl sulfenamide (CZ), N-t-butyl-2-benzothiazolyl sulfenamide (NS) or the like; a guanidine-based vulcanization accelerator such as diphenyl guanidine (DPG) or the like; and so on. The amount of the vulcanization accelerator used is preferably within a range of 0.1 to 5 parts by mass, more preferably within a range of 0.2 to 3 parts by mass based on 100 parts by mass of the rubber component. These vulcanization accelerators may be used alone or in a combination of two or more.

A processing oil or the like can be used as a softener in the rubber composition of the invention. As the processing oil are mentioned a paraffinic oil, a naphthenic oil, an aromatic oil and the like. Among them, the aromatic oil is preferable in view of the tensile strength and wear resistance, and the naphthenic oil and the paraffinic oil are preferable in view of the hysteresis loss and low-temperature characteristics. The amount of the processing oil used is preferably within a range of 0 to 100 parts by mass based on 100 parts by mass of the rubber component. When the amount of the processing oil used exceeds 100 parts by mass based on 100 parts by mass of the rubber component, the tensile strength and low heat build-up of the vulcanized rubber tend to be deteriorated.

In the rubber composition of the invention can be compounded additives usually used in the rubber industry such as an anti-aging agent, zinc oxide, stearic acid, an antioxidant, an antiozonant and the like within amounts not damaging the object of the invention in addition to the components (A) and (B), the common rubber component, the filler, the silane coupling agent, the crosslinking agent, the vulcanization accelerator and the softener.

The rubber composition of the invention is obtained by milling with a milling machine such as rolls, an internal mixer or the like, which can be shaped and vulcanized for use in tire applications such as a tread, an under tread, a carcass, a sidewall, a bead and the like as well as a rubber cushion, a belt, a hose and other industrial products, but it is particularly suitable for use in the tire tread.

The pneumatic tire according to the invention is characterized by using the above rubber composition in a tread rubber. The tire has good fracture resistance and wear resistance and excellent steering stability because the aforementioned rubber composition having the high hysteresis loss (tan δ) and the good wear resistance and fracture characteristics is applied to the tread rubber of the tire. The pneumatic tire according to the invention is not particularly limited as far as the above rubber composition is used for the tread rubber, and can be produced by the usual method. Moreover, as a gas filled into the tire can be used usual air or air having a regulated partial oxygen pressure but also inert gases such as nitrogen, argon, helium and so on.

The following examples are given in illustration of the invention and are not intended as limitations thereof.

Copolymers (A-1)-(A-4) and copolymers (B-1)-(B-3) are synthesized by the following method, and the bound styrene content, vinyl bond content, weight average molecular weight as converted to polystyrene and hydrogenation ratio are measured by the following method.

### (1) Bound styrene content

The bound styrene content of the synthesized copolymer is calculated from an integral ratio of ¹H-NMR spectrum.

### (2) Vinyl bond content

The vinyl bond content in the butadiene portion of the synthesized copolymer is analyzed by an infrared method.

### (3) Weight average molecular weight as converted to polystyrene (Mw)

The weight average molecular weight as converted to polystyrene of the synthesized copolymer is measured by a GPC. In the measurement, 244 model GPC made by Waters Corp. is used as the GPC, a differential refractometer is used as a detector, GMH-3, GMH-6 and G6000H-6 columns made by TOSOH Corporation are used as a column, and tetrahydrofuran is used as a mobile phase. Further, the polystyrene-converted molecular weight of the copolymer is determined by using a calibration curve which is previously prepared by using a monodisperse styrene polymer made by Waters Corp. and determining a relation between molecular weight of peak of the monodisperse styrene polymer through GPC and count number of GPC.

### (4) Hydrogenation ratio

The hydrogenation ratio in the butadiene portion of the synthesized copolymer is calculated from a reduction of an unsaturated bond portion in a spectrum of 100 MHz ¹H-NMR measured at a concentration of 15% by mass with using carbon tetrachloride as a solvent.

### <Synthesis of Copolymer (A-1)>

In an autoclave of 5 liters sufficiently purged with nitrogen and provided with a stirring blade are charged 3000 g of cyclohexane, 12 g of tetrahydrofuran (THF), 186 g of 1,3-butadiene and 114 g of styrene, and a temperature inside the autoclave is adjusted to 21°C. Then, 0.10 g of n-butyllithium is added to conduct polymerization under a temperature rising condition for 60 minutes, and the conversion of the monomer is confirmed to be 99%. Thereafter, 3.5 g of 2,6-di-t-butyl-p-cresol is added as an antioxidant to obtain a copolymer (A-1). The analytical values are shown in Table 1.

### <Synthesis of Copolymer (A-2)>

In an autoclave of 5 liters sufficiently purged with nitrogen and provided with a stirring blade are charged 3000 g of cyclohexane, 12 g of tetrahydrofuran (THF), 186 g of 1,3-butadiene and 114 g of styrene, and a temperature inside the autoclave is adjusted to 21°C. Then, 0.10 g of n-butyllithium is added to conduct polymerization under a temperature rising condition for 60 minutes, and the conversion of the monomer is confirmed to be 99%. Further, a catalyst solution of nickel naphthenate : triethylaluminium : butadiene = 1:3:3 (molar ratio) previously prepared in another vessel is charged so as to become 1 mole of nickel per 1000 moles of butadiene portion in the copolymer. Thereafter, hydrogen is introduced into the reaction system under a hydrogen pressure of 30 kg/cm² to conduct the reaction at 80°C. Then, 3.5 g of 2,6-di-t-butyl-p-cresol is added as an antioxidant to obtain a copolymer (A-2). The analytical values are shown in Table 1.

### <Synthesis of Copolymers (A-3)-(A-4)>

Copolymers (A-3)-(A-4) are synthesized in the same manner as in the copolymer (A-2) except that the hydrogen pressure and hydrogenation time are changed. The analytical values are shown in Table 1.

### <Synthesis of Copolymer (B-1)>

In an autoclave of 5 liters sufficiently purged with nitrogen and provided with a stirring blade are charged 3000 g of cyclohexane, 12 g of tetrahydrofuran (THF), 200 g of 1,3-butadiene and 100 g of styrene, and a temperature inside the autoclave is adjusted to 21°C. Then, 1.50 g of n-butyllithium is added to conduct polymerization under a temperature rising condition for 60 minutes, and the conversion of the monomer is confirmed to be 99%. Thereafter, 4.68 g of tributylsilyl chloride is added to stop the polymerization to obtain a copolymer (B-1). The analytical values are shown in Table 1.

### <Synthesis of Copolymer (B-2)>

In an autoclave of 5 liters sufficiently purged with nitrogen and provided with a stirring blade are charged 3000 g of cyclohexane, 12 g of tetrahydrofuran (THF), 200 g of 1,3-butadiene and 100 g of styrene, and a temperature inside the autoclave is adjusted to 21°C. Then, 1.50 g of n-butyllithium is added to conduct polymerization under a temperature rising condition for 60 minutes, and the conversion of the monomer is confirmed to be 99%. Thereafter, 4.68 g of tributylsilyl chloride is added to stop the polymerization, and a catalyst solution of nickel naphthenate : triethylaluminium : butadiene = 1:3:3 (molar ratio) previously prepared in another vessel is charged so as to become 1 mole of nickel per 1000 moles of butadiene portion in the copolymer. Thereafter, hydrogen is introduced into the reaction system under a hydrogen pressure of 30 atm to conduct the reaction at 80°C, and as a result a copolymer (B-2) is obtained. The analytical values are shown in Table 1.

### <Synthesis of Copolymer (B-3)>

A copolymer (B-3) is synthesized in the same manner as in the copolymer (B-2) except that the hydrogen pressure and hydrogenation time are changed. The analytical values are shown in Table 1.

**Table 1**

| | Bound styrene content (mass%) | Vinyl bond content (%) | Weight average molecular weight | Hydrogenation ratio (%) |
|---|---|---|---|---|
| Copolymer (A-1) | 38 | 35 | 400 × 10³ | 0 |
| Copolymer (A-2) | 38 | 36 | 410 × 10³ | 31 |
| Copolymer (A-3) | 38 | 35 | 410 × 10³ | 51 |
| Copolymer (A-4) | 38 | 35 | 400 × 10³ | 70 |
| Copolymer (B-1) | 33 | 40 | 15 × 10³ | 0 |
| Copolymer (B-2) | 33 | 40 | 15 × 10³ | 49 |
| Copolymer (B-3) | 33 | 42 | 15 × 10³ | 85 |

Then, a rubber composition having a compounding recipe as shown in Table 2 is prepared according to a usual method by using the above copolymers (A-1)-(A-4) and (B-1)-(B-3), and then the wear resistance, steering stability and fracture resistance of the resulting rubber composition are evaluated by the following methods. The results are shown in Table 2.

### (5) Wear resistance

The wear resistance is evaluated by measuring a worn amount at a slip ratio of 60% and room temperature by means of a Lambourn abrasion tester, which is shown by an index on the basis that the worn amount of the rubber composition in Comparative Example 1 is 100. The larger the index value, the less the worn amount and the better the wear resistance.

### (6) Steering stability

Tan δ is measured at a shear strain of 5%, a temperature of 60°C and a frequency of 15 Hz by using a mechanical spectrometer manufactured by RHEOMETRICS Corporation, which is shown by an index on the basis that the tan δ of the comparative Example 1 is 100. The larger the index value, the larger the hysteresis loss and the better the steering stability.

### (7) Fracture resistance

A tensile test is conducted according to JIS K 6301-1995 to measure a tensile strength (Tb) of a vulcanized rubber composition, which is shown by an index on the basis that the tensile strength of Comparative Example 1 is 100. The larger the index value, the better the fracture resistance.

**Table 2**

| | | Comparative Example 1 | Comparative Example 2 | Comparative Example 3 | Comparative Example 4 | Comparative Example 5 | Example 1 | Example 2 | Example 3 | Example 4 |
|---|---|---|---|---|---|---|---|---|---|---|
| Copolymer(A-1) | | 100 | 100 | 100 | - | - | - | - | - | - |
| Copolymer (A-2) | | - | - | - | - | - | 100 | - | 100 | - |
| Copolymer (A-3) | | - | - | - | - | 100 | - | 100 | - | 100 |
| Copolymer (A-4) | | - | - | - | 100 | - | - | - | - | - |
| Aromatic oil | | - | - | - | - | 30 | - | - | - | - |
| Copolymer (B-1) | | 30 | - | - | - | - | - | - | 30 | - |
| Copolymer (B-2) | | - | 30 | - | - | - | - | - | - | 30 |
| Copolymer (B-3) | | - | - | 30 | 30 | - | 30 | 30 | - | - |
| Carbon black * 1 | parts by mass | 65 | 65 | 65 | 65 | 65 | 65 | 65 | 65 | 65 |
| Stearic acid | | 2 | 2 | 2 | 2 | 2 | 2 | 2 | 2 | 2 |
| Zinc white | | 3 | 3 | 3 | 3 | 3 | 3 | 3 | 3 | 3 |
| Antioxidant 6C *2 | | 1 | 1 | 1 | 1 | 1 | 1 | 1 | 1 | 1 |
| Vulcanization accelerator DM *3 | | 0.5 | 0.5 | 0.5 | 0.5 | 0.5 | 0.5 | 0.5 | 0.5 | 0.5 |
| Vulcanization accelerator NS *4 | | 1 | 1 | 1 | 1 | 1 | 1 | 1 | 1 | 1 |
| Sulfur | | 1.8 | 1.8 | 1.8 | 2.8 | 2.5 | 1.8 | 2.5 | 1.8 | 2.5 |
| Wear resistance | index | 100 | 99 | 98 | 60 | 94 | 105 | 112 | 105 | 105 |
| Steering stability | index | 100 | 118 | 128 | 120 | 90 | 135 | 138 | 130 | 136 |
| Fracture resistance | index | 100 | 92 | 85 | 65 | 90 | 110 | 105 | 113 | 115 |

| | | | | | | | | | | |
|---|---|---|---|---|---|---|---|---|---|---|
| * 1 ISAF, SEAST 3H made by TOKAI CARBON CO., LTD. *2 N-(1,3-dimethylbutyl)-N'-phenyl-p-phenylenedamine, "NOCRAC 6C" made by OUCHISHINKO CHEMICAL INDUSTRIAL CO., LTD. *3 Dibenzothiazyl disulfide. *4 N-t-butyl-2-benzothiazolyl sulfenamide, "NOCCELER NS" made by OUCHISHINKO CHEMICAL INDUSTRIAL CO., LTD. | | | | | | | | | | |

As seen from the results of the examples in Table 2, the rubber compositions formed by compounding the low-molecular weight aromatic vinyl compound-conjugated diene compound copolymer (component B) having the specified molecular weight and hydrogenation ratio into the high-molecular weight aromatic vinyl compound-conjugated diene compound copolymer (component A) having the molecular weight and hydrogenation ratio specified in the invention can highly improve the steering stability while improving the fracture resistance and wear resistance.

On the contrary, as seen from the results of the comparative examples 2 and 3, when the hydrogenated low-molecular weight aromatic vinyl compound-conjugated diene compound copolymer is compounded into the unhydrogenated high-molecular weight aromatic vinyl compound-conjugated diene compound copolymer, the fracture resistance and wear resistance of the rubber composition are deteriorated. Also, as seen from the results of the comparative example 4, when the hydrogenated low-molecular weight aromatic vinyl compound-conjugated diene compound copolymer is compounded into the excessively hydrogenated high-molecular weight aromatic vinyl compound-conjugated diene compound copolymer, the wear resistance and fracture resistance of the rubber composition are significantly deteriorated. Further, as seen from the results of the comparative example 5, the rubber composition formed by compounding the aromatic oil into the high-molecular weight aromatic vinyl compound-conjugated diene compound copolymer (component A) having the molecular weight and hydrogenation ratio specified in the invention has inferior wear resistance, steering stability and fracture resistance as compared with the comparative example 1.

## Claims

1. A rubber composition comprising 10 to 200 parts by mass of a component (B)which is an aromatic vinyl compound-conjugated diene compound copolymer or a conjugated diene compound polymer having a weight average molecular weight as measured through a gel permeation chromatography and converted to polystyrene of 1.0x10³ to 2.0x10⁵ based on 100 parts by mass of a component (A) which is an aromatic vinyl compound-conjugated diene compound copolymer or a conjugated diene compound polymer having a weight average molecular weight as measured through a gel permeation chromatography and converted to polystyrene of 3.0x10⁵ to 3.0x10⁶,
wherein not less than 10% but less than 60% of an unsaturated bond in a conjugated diene compound portion of the component (A) is hydrogenated, and not more than 90% of an unsaturated bond in a conjugated diene compound portion of the component (B) is hydrogenated.

2. A rubber composition according to claim 1, wherein the component (A) is one formed by polymerizing with a lithium-based polymerization initiator.

3. A rubber composition according to claim 1 or 2, wherein the component (A) is styrene-butadiene copolymer.

4. A rubber composition according to claim 3, wherein a bound styrene content of the component (A) is 20 to 40% by mass.

5. A rubber composition according to claim 3 or 4, wherein a vinyl bond content in a butadiene portion of the component (A) is 30 to 60%.

6. A rubber composition according to any of claims 1 to 5, wherein 30% to 50% of the unsaturated bond in the conjugated diene compound portion of the component (A) is hydrogenated.

7. A rubber composition according to any of claims 1 to 6, wherein a bound styrene content of the component (B) is 0 to 60% by mass.

8. A rubber composition according to any of claims 1 to 7, wherein 20% to 90% of the unsaturated bond in the conjugated diene compound portion of the component (B) is hydrogenated.

9. A rubber composition according to claim 8, wherein 40% to 90% of the unsaturated bond in the conjugated diene compound portion of the component (B) is hydrogenated.

10. A rubber composition according to any of claims 1 to 9, wherein the component (B) has a number average molecular weight as measured through a gel permeation chromatography and converted to polystyrene of not less than 2000 but less than 30000.

11. A rubber composition according to any of claims 1 to 10, which comprises 10 to 100 parts by mass of the component (B) based on 100 parts by mass of the component (A).

12. A pneumatic tire **characterized by** using a rubber composition as claimed in any of claims 1 to 11 in a tread rubber.

## Patentansprüche

1. Kautschukzusammensetzung, die 10 bis 200 Masseteile einer Komponente (B) aufweist, die ein Copolymer aus einer aromatischen Vinylverbindung und einer konjugierten Dienverbindung oder ein Polymer aus einer konjugierten Dienverbindung ist, das ein durch Gelpermationschromatographie gemessenes und auf Polystyrol umgerechnetes massegemitteltes Molekulargewicht von 1,0 × 10³ bis 2,0 × 10⁵ aufweist, basierend auf 100 Masseteilen einer Komponente (A), die ein Copolymer aus einer aromatischen Vinylverbindung und einer konjugierten Dienverbindung oder ein Polymer aus einer konjugierten Dienverbindung ist, das ein durch Gelpermationschromatographie gemessenes und auf Polystyrol umgerechnetes massegemitteltes Molekulargewicht von 3,0 × 10⁵ bis 3,0 × 10⁶ aufweist,
wobei nicht weniger als 10%, aber weniger als 60% einer ungesättigten Bindung in einem Abschnitt mit konjugierter Dienverbindung der Komponente (A) hydriert sind und nicht mehr als 90% einer ungesättigten Bindung in einem Abschnitt mit konjugierter Dienverbindung der Komponente (B) hydriert sind.

2. Kautschukzusammensetzung nach Anspruch 1, wobei die Komponente (A) durch Polymerisation mit einem Polymerisationsinitiator auf Lithiumbasis gebildet wird.

3. Kautschukzusammensetzung nach Anspruch 1 oder 2, wobei die Komponente (A) ein Styrol-Butadien-Copolymer ist.

4. Kautschukzusammensetzung nach Anspruch 3, wobei ein gebundener Styrolgehalt der Komponente (A) 20 bis 40 Masse-% beträgt.

5. Kautschukzusammensetzung nach Anspruch 3 oder 4, wobei ein Vinylbindungsgehalt in einem Butadien-Abschnitt der Komponente (A) 30 bis 60% beträgt.

6. Kautschukzusammensetzung nach einem der Ansprüche 1 bis 5, wobei 30% bis 50% der ungesättigten Bindungen in dem Abschnitt mit konjugierter Dienverbindung der Komponente (A) hydriert sind.

7. Kautschukzusammensetzung nach einem der Ansprüche 1 bis 6, wobei ein gebundener Styrolgehalt der Komponente (B) 0 bis 60 Masse-% beträgt.

8. Kautschukzusammensetzung nach einem der Ansprüche 1 bis 7, wobei 20% bis 90% der ungesättigten Bindungen in dem Abschnitt mit konjugierter Dienverbindung der Komponente (B) hydriert sind.

9. Kautschukzusammensetzung nach Anspruch 8, wobei 40% bis 90% der ungesättigten Bindungen in dem Abschnitt mit konjugierter Dienverbindung der Komponente (B) hydriert sind.

10. Kautschukzusammensetzung nach einem der Ansprüche 1 bis 9, wobei die Komponente (B) ein durch Gelpermationschromatographie gemessenes und auf Polystyrol umgerechnetes zahlengemitteltes Molekulargewicht von nicht weniger als 2000, aber weniger als 30000 aufweist.

11. Kautschukzusammensetzung nach einem der Ansprüche 1 bis 10, die 10 bis 100 Masseteile der Komponente (B) aufweist, basierend auf 100 Masseteilen der Komponente (A).

12. Luftreifen, **gekennzeichnet durch** Verwendung einer Kautschukzusammensetzung nach einem der Ansprüche 1 bis 11 in einem Laufflächengummi.

## Revendications

1. Composition de caoutchouc comprenant 10 à 200 parties en masse d'un constituant (B) qui est un copolymère d'un composé diénique conjugué et d'un composé vinylique aromatique ou un polymère de composé diénique conjugué ayant un poids moléculaire moyen en poids tel que mesuré par chromatographie par perméation de gel et converti en polystyrène de 1,0 x 10³ à 2,0 x 10⁵ pour 100 parties en masse d'un constituant (A) qui est un copolymère d'un composé diénique conjugué et d'un composé vinylique aromatique ou un polymère de composé diénique conjugué ayant un poids moléculaire moyen en poids tel que mesuré par chromatographie par perméation de gel et converti en polystyrène de 3,0 x 10⁵ à 3,0 x 10⁶,
dans laquelle pas moins de 10% mais moins de 60% d'une liaison insaturée dans une partie composé diénique conjugué du constituant (A) est hydrogénée, et pas plus de 90% d'une liaison insaturée dans une partie composé diénique conjugué du constituant (B) est hydrogénée.

2. Composition de caoutchouc selon la revendication 1, dans laquelle le constituant (A) est formé par polymérisation avec un initiateur de polymérisation à base de lithium.

3. Composition de caoutchouc selon la revendication 1 ou 2, dans laquelle le constituant (A) est un copolymère styrène-butadiène.

4. Composition de caoutchouc selon la revendication 3, dans laquelle une teneur en styrène lié du constituant (A) est de 20 à 40% en masse.

5. Composition de caoutchouc selon la revendication 3 ou 4, dans laquelle une teneur en liaison vinyle dans une partie butadiène du constituant (A) est de 30 à 60%.

6. Composition de caoutchouc selon l'une quelconque des revendications 1 à 5, dans laquelle 30% à 50% des liaisons insaturées dans la partie composé diénique conjugué du constituant (A) est hydrogénée.

7. Composition de caoutchouc selon l'une quelconque des revendications 1 à 6, dans laquelle une teneur en styrène lié du constituant (B) est de 0 à 60% en masse.

8. Composition de caoutchouc selon l'une quelconque des revendications 1 à 7, dans laquelle 20% à 90% des liaisons insaturées dans la partie composé diénique conjugué du constituant (B) est hydrogénée.

9. Composition de caoutchouc selon la revendication 8, dans laquelle 40% à 90% des liaisons insaturées dans la partie composé diénique conjugué du constituant (B) est hydrogénée.

10. Composition de caoutchouc selon l'une quelconque des revendications 1 à 9, dans laquelle le constituant (B) a un poids moléculaire moyen en nombre tel que mesuré par chromatographie par perméation de gel et converti en polystyrène non inférieur à 2000 mais inférieur à 30000.

11. Composition de caoutchouc selon l'une quelconque des revendications 1 à 10, qui comprend 10 à 100 parties en masse du constituant (B) pour 100 parties en masse du constituant (A).

12. Pneumatique **caractérisé par** l'utilisation d'une composition de caoutchouc telle que définie dans l'une quelconque des revendications 1 à 11 dans un caoutchouc de bande de roulement.
